# FASCICULE DE BREVET EUROPEEN

(11) **EP 3 151 598 B1**
(45) Date de publication et mention de la délivrance du brevet: **01.07.2020**
(21) Numéro de dépôt: 16191367.8
(22) Date de dépôt: 29.09.2016
(51) Int. Cl.: H04W 12/04, H04W 12/00

(54) **PROCÉDÉ DE CONFIGURATION ET D'UTILISATION SÉCURISÉE D'UN SYSTÈME DE MODULES DE SURVEILLANCE ET/OU DE CONTRÔLE**
VERFAHREN ZUR KONFIGURATION UND DEM GESICHERTEN EINSATZ EINES SYSTEMS VON ÜBERWACHUNGS- UND/ODER KONTROLLMODULEN
METHOD FOR THE SECURE CONFIGURATION AND USAGE OF A SYSTEM OF MONITORING AND/OR CONTROL MODULES

(30) Priorité: 30.09.2015 FR 1559229
(43) Date de publication de la demande: 05.04.2017
(73) Titulaire: Schneider Electric Industries SAS, 92500 Rueil-Malmaison (FR)
(72) Inventeur: GOUTAY, Roland, 38050 Grenoble Cedex 09 (FR); CANTON, Philippe, 38050 Grenoble Cedex 09 (FR); GOLAZ, Yann, 38050 Grenoble Cedex 09 (FR)
(74) Mandataire: Lavoix

(56) Documents cités:
- FR-A1- 2 984 051
- US-A1- 2013 223 279
- US-A1- 2014 105 397
- US-B1- 9 009 805

## Description

L'invention concerne un procédé de configuration sécurisée d'un système de modules de surveillance et/ou de contrôle d'équipements domestiques, industriels ou tertiaires, le système comprenant un module communicant. Elle concerne également un procédé d'utilisation sécurisée d'un tel système de modules associée, ainsi que des dispositifs associés.

Elle se situe dans le domaine de la sécurisation de configuration et d'installation de systèmes de modules de surveillance et/ou de contrôle.

Un problème se pose en particulier à la configuration sécurisée de modules à installer sur des sites en construction.

En effet, lors de la construction de bâtiments ou de logements diverses installations sont mises en place, par exemple les câblages électriques, les installations d'eau potable, de gaz, de chauffage. Par exemple dans le domaine domestique, un bâtiment est équipé de telles installations à la construction, et les logements individuels sont équipés de compteurs de consommation par logement.

Il existe des dispositifs programmables ayant des capacités de communication, permettant à l'utilisateur final de gérer et de commander les divers équipements, par commande directe ou à distance. Par exemple, on peut installer un module communicant, apte à recevoir des informations de consommation de divers équipements par des liaisons câblées ou des liaisons radio de proximité et un protocole de communication associé, et à communiquer ces informations de consommation à un serveur centralisé par un autre mode de communication.

Par exemple, Schneider Electric commercialise un tel ensemble ou système de modules, qui permet de surveiller et de maîtriser les consommations d'énergie. Ce système de modules a des capacités de communication, via un module communicant utilisant le protocole de communication IP (Internet Protocol).

L'installation d'un tel système de modules et sa configuration initiale pour la mise en fonctionnement, nécessitent l'intervention d'un opérateur d'installation spécialisé. En effet, la configuration comprend par exemple la mise en place et l'appairage des modules récepteurs radio avec des émetteurs associés aux équipements ou installations locales, dans un contexte domestique, industriel ou tertiaire, selon le protocole de communication de ces émetteurs.

Lorsque l'installation se fait au moment de la construction d'un bâtiment, l'installation, la configuration et l'enregistrement d'un tel système de modules comprenant un module communicant apte à communiquer via Internet pose problème lorsque l'accès au réseau internet et/ou le raccordement électrique ne sont pas disponibles sur le chantier.

De plus, les chantiers de construction sont des espaces ouverts et souvent non gardés, et par conséquent de nombreux vols de matériel ont lieu sur les chantiers.

Le document US 9 009 805 B1 décrit un procédé et un système d'association d'un dispositif, par exemple un dispositif de surveillance dans le domaine de la vidéosurveillance, avec un compte utilisateur et un dispositif client associé à l'utilisateur.

Le document FR 2 984 051 décrit un procédé de configuration par association d'un terminal machine avec un terminal utilisateur.

Le document US2014/0105397 décrit un dispositif de communication utilisable pour la configuration d'appareils externes en utilisant la communication sans fil de proximité.

Il existe un besoin de faciliter l'installation et la configuration d'un système de modules comprenant un module communicant, par exemple sur un chantier de construction ou sur tout site dépourvu d'accès réseau et/ou dépourvu de raccordement électrique, tout en apportant une amélioration de la sécurité par rapport à l'installation ou l'utilisation éventuelle de matériel volé.

L'invention s'inscrit plus particulièrement dans ce contexte et a pour objectif de proposer un procédé de configuration sécurisée d'un système de modules ayant des capacités de communication. L'invention est définie dans les revendications indépendantes 1 et 11.

A cet effet, l'invention propose, selon un premier aspect, un procédé de configuration et d'utilisation sécurisées d'un système de modules de surveillance et/ou de contrôle d'équipements domestiques, industriels ou tertiaires, le système comprenant un module communicant, apte à recevoir des informations de surveillance et de contrôle des autres modules du système et à communiquer les informations reçues à un serveur centralisé via un premier mode de communication, conforme à la revendication 1.

Avantageusement, le procédé de l'invention mis en œuvre permet d'effectuer une configuration via un équipement portable et de mémoriser, pour un module communicant, une adresse réseau physique associée, une information d'identification de l'opérateur d'installation et une information de géolocalisation, permettant ainsi d'apporter une sécurité renforcée, y compris lorsque l'installation du système de modules comportant le modules communicant se fait lorsque au moins certains de ces modules ne sont pas encore alimentés en électricité et lorsque l'accès au réseau de communication n'est pas disponible.

Le procédé de configuration et d'utilisation sécurisée selon l'invention peut également présenter une ou plusieurs des caractéristiques conformément aux revendications dépendantes.

Selon un autre aspect, l'invention concerne un système de configuration et d'utilisation sécurisée d'un système de modules de surveillance et/ou de contrôle d'équipements domestiques, industriels ou tertiaires, comprenant ledit système de modules et un serveur centralisé, ledit système de modules comprenant un module communicant, apte à recevoir des informations de surveillance et de contrôle des autres modules du système de modules et à communiquer les informations reçues au serveur centralisé via un premier mode de communication. Le système de configuration et d'utilisation sécurisées comporte :
- un équipement portable associé à un opérateur d'installation adapté à :
   - obtenir un identifiant apte à encoder des informations contenant une adresse réseau physique du module communicant,
   - obtenir une information de géolocalisation d'installation,
   - transmettre, via un deuxième mode de communication, une information contenant ladite adresse réseau physique audit serveur centralisé;
   - transmettre, via le deuxième mode de communication, au serveur centralisé, l'information de géolocalisation d'installation,
- le serveur centralisé étant adapté à vérifier une mémorisation préalable de ladite adresse réseau physique, et, en cas de vérification négative, à autoriser la configuration dudit système de modules et à enregistrer, dans une mémoire du serveur centralisé, ladite adresse réseau physique en association avec une information d'identification de l'opérateur d'installation et avec ladite information de géolocalisation d'installation.

Selon un autre aspect, l'invention concerne un programme d'ordinateur comportant des instructions pour mettre en oeuvre les étapes d'un procédé de configuration et d'utilisation sécurisée d'un système de modules de surveillance et/ou de contrôle d'équipements domestiques, industriels ou tertiaires tel que brièvement décrit ci-dessus lors de l'exécution du programme par au moins deux processeurs.

D'autres caractéristiques et avantages de l'invention ressortiront de la description qui en est donnée ci-dessous, à titre indicatif et nullement limitatif, en référence aux figures annexées, parmi lesquelles :
- la figure 1 représente schématiquement un système dans lequel le procédé de configuration selon l'invention trouve une application ;
- la figure 2 est un synoptique des principales étapes d'un procédé de configuration sécurisée d'un module communicant selon un mode de réalisation.
- la figure 3 est un synoptique des principales étapes d'un procédé d'utilisation sécurisée d'un module communicant selon un mode de réalisation.

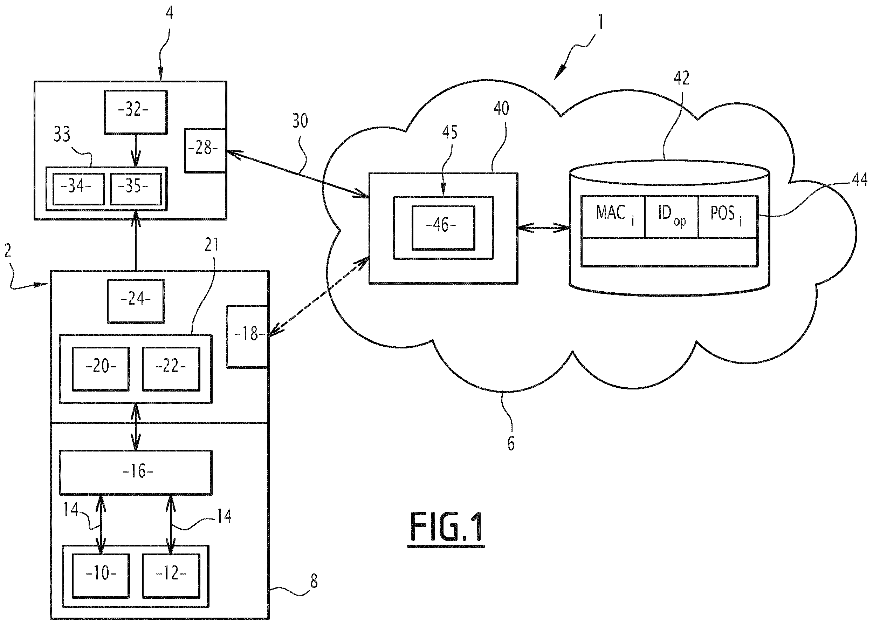

La figure 1 représente schématiquement un système de configuration 1 dans lequel l'invention trouve une application.

Le système 1 comprend un système de modules 8 de surveillance et/ou de contrôle d'équipements domestiques ou industriels comme par exemple des compteurs de consommation électrique.

Dans un cas de mise en oeuvre de l'invention, le système de modules 8 est à installer dans un bâtiment non représenté, par exemple dans un chantier de construction.

Le système de modules 8 comporte un module communicant 2 ayant des capacités de communication réseau pour se connecter au réseau Internet 6, selon un premier mode de communication.

Le système 1 comporte en outre un équipement portable 4, associé à un opérateur d'installation dans la phase d'installation/configuration et associé à un utilisateur final dans la phase d'utilisation, qui a des capacités de communication via un deuxième mode de communication, mettant en oeuvre un réseau de téléphonie mobile, par exemple selon le protocole 3G ou LTE, comme expliqué plus en détail par la suite, pour réaliser une connexion au réseau Internet 6.

Le système comporte en outre des modules 10, 12 récepteurs/émetteurs d'informations de surveillance et de contrôle, chacun de ces modules étant apte à communiquer avec un ou plusieurs équipements.

Les produits ou modules constitutifs du système de modules 8 comportent des moyens de communication radio 16, aptes à communiquer selon un troisième mode de communication mettant en œuvre un protocole de communication radio prédéterminé, par exemple Zigbee, Wifi, Bluetooth, WM-Bus (pour « Wireless Meter Bus »), avec les modules émetteurs/récepteurs d'informations 10, 12.

Les liaisons de communication radio selon ce troisième mode de communication sont notées 14.

Par exemple, il s'agit de comptage et de contrôle de consommation d'électricité, de gaz, d'eau, et les modules 10, 12 sont alors aptes à transmettre à un serveur distant, via le module communicant 2, des informations de consommation et à recevoir des données de configuration et de commande.

Dans un mode de réalisation, un des modules 10, 12 reçoit des informations d'un tableau électrique (non représenté) de l'installation considérée.

Il est à noter que les divers modules faisant partie du système de modules 8 peuvent être implémentés dans un seul dispositif ou dans des dispositifs séparés aptes à communiquer entre eux par des moyens filaires ou par des moyens radio.

Le module communicant 2 comporte un module de communication 18 qui utilise un réseau de communication, par exemple un réseau de communication sans fil WiFi ou un port Ethernet, permettant la connexion au réseau 6.

Ainsi, le module communicant 2 sert de passerelle réseau au système 8 de modules de surveillance et/ou de contrôle.

Le module communicant 2 comprend également une unité de calcul 21 comprenant au moins un processeur, apte à mettre en œuvre une application logicielle 20, qui comporte des instructions de code de programme permettant d'exécuter des étapes d'un procédé de configuration selon l'invention, et une application logicielle 22, qui ne sera pas décrite plus en détail ici, qui met en œuvre le fonctionnement applicatif du module communicant 2.

Par exemple, l'application logicielle 22 met en œuvre un procédé de gestion et de contrôle de consommation électrique.

De plus, le module communicant 2 comporte un identifiant 24 apte à encoder des informations, par exemple de type code QR, formé dans un mode de réalisation par une matrice de pixels noirs et blancs, correspondant par exemple à des informations binaires 0 et 1. L'agencement des pixels noirs et blancs permet d'encoder une chaîne de données binaires qui est interprétable par un lecteur approprié.

Alternativement, l'identifiant 24 est un code Datamatrix ou un code-barres, lisibles par un lecteur approprié.

Dans un mode de réalisation, un tel identifiant 24 est un identifiant graphique imprimé ou gravé sur le boîtier du module communicant 2.

Alternativement, les informations encodées par l'identifiant 24 sont stockées dans une mémoire du module communicant 2 et accessibles via un moyen de communication radio, par exemple Bluetooth ou Wifi.

Selon une autre alternative, l'identifiant 24 est encodé dans une marqueur de radio-identification (RFID).

Avantageusement, l'identifiant 24 encode un identifiant unique associé au module communicant 2, qui est de préférence une adresse réseau physique, ou adresse MAC (pour Media Access Control), qui sera utilisée pour les communications réseau dans la couche physique.

Selon une variante, l'identifiant 24 encode, en plus de l'adresse réseau physique, des informations relatives aux autres modules du système de modules 8.

L'équipement portable 4 est apte à capturer l'identifiant 24, en utilisant par exemple une caméra intégrée ou un autre lecteur approprié.

Cet équipement portable 4 est de préférence un dispositif programmable tel un ordinateur portable, un téléphone portable ou une tablette, équipé de manière connue d'un processeur de calcul, d'une interface homme-machine, de moyens de capture d'image (e.g. une caméra) ou de lecture de code-barres, et d'un module de communication 28 via un réseau de téléphonie mobile, par exemple selon le protocole 3G ou LTE, permettant d'envoyer et de recevoir des communications 30. Optionnellement, l'équipement portable 4 est équipé d'un moyen de communication radio, par exemple Bluetooth, Wifi ou NFC, ce qui permet notamment de lire les informations stockées dans une mémoire du module communicant 2 dans un mode de réalisation.

Avantageusement, l'équipement portable 4 permet de se connecter au réseau 6 en l'absence d'accès des moyens dédiés sur le site considéré, et en l'absence d'alimentation électrique des modules du système de modules 8.

Ainsi, l'équipement portable 4 permet un accès au réseau Internet sur un chantier avant l'installation de câblages ou de points d'accès sans fil au réseau de communications 6, et donc avant d'avoir la possibilité d'enregistrer le module communicant 2 et le système de modules 8 pour une utilisation ultérieure.

L'équipement portable 4 est également muni d'un module de géolocalisation par satellite, ou module GPS, référencé 32, apte à calculer et à mettre à jour dynamiquement la position de géolocalisation de l'équipement portable 4. En variante ou en complément, l'équipement portable 4 est apte à obtenir une position de géolocalisation via une connexion à une balise Wifi ou 3G.

L'équipement portable 4 comporte une unité de calcul 33 comportant un processeur, apte à mettre en œuvre des applications logicielles 34, 35, comportant des instructions de code de programme permettant d'exécuter des étapes du procédé de configuration selon l'invention.

Lors de la configuration du module communicant 2, l'application 34 de l'équipement portable envoie à un serveur centralisé 40 un message contenant l'adresse MAC du module communicant 2, notée MACᵢ, ainsi qu'une information d'identification ID_{OP} de l'opérateur d'installation.

L'information d'identification ID_{OP} permet d'identifier l'opérateur d'installation et de le contacter, et comprend par exemple un identifiant de type nom de connexion (ou login en anglais) et/ou une adresse email ou de téléphone, permettant de joindre l'opérateur ultérieurement. Dans un mode de réalisation, l'information d'identification ID_{OP} comprend uniquement une adresse courriel de l'opérateur d'installation.

En outre, l'application 34 envoie également l'information de géolocalisation POSᵢ de l'équipement portable 4, récupérée sensiblement au même moment qu'est effectuée la capture de l'identifiant 24 du module communicant 2.

Ainsi, l'information de géolocalisation POSᵢ de l'équipement portable 4 est représentative de la position de géolocalisation du module communicant 2 lors de son installation.

Le serveur centralisé 40 est connecté à ou comprend une unité de mémorisation 42, apte à mémoriser dans une base de données 44 les informations reçues.

En variante, les informations reçues sont mémorisées dans des registres ou dans des fichiers séparés.

Le serveur 40 comporte également des processeurs de calcul 45, aptes à mettre en œuvre une application logicielle 46, qui comporte des instructions de code de programme permettant d'exécuter des étapes du procédé de configuration selon l'invention.

L'application logicielle 35 est destinée à l'utilisateur final, en phase d'utilisation pour le contrôle et la surveillance du système de modules 8 en utilisant des informations reçues du serveur 40. Le serveur 40 utilise les informations de surveillance transmises par le module communicant 2 en phase d'utilisation.

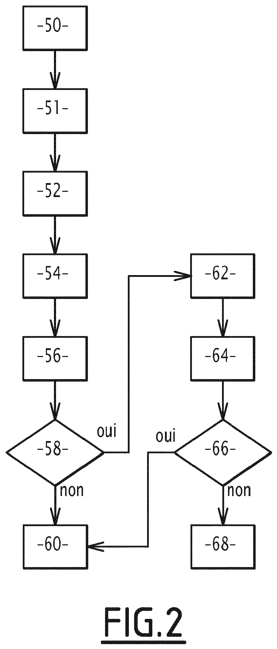

La figure 2 est un synoptique des principales étapes d'un procédé de configuration sécurisée d'un module communicant selon un mode de réalisation de l'invention.

Les étapes de ce procédé sont mises en œuvre respectivement par les applications logicielles 34 et 46, comme expliqué plus en détail ci-après.

Lors d'une première étape 50, l'opérateur d'installation s'identifie sur l'application logicielle 34, par fourniture d'une ou plusieurs informations d'identification ID_{OP} via une interface graphique de l'équipement portable 4.

Ensuite lors d'une étape 51 l'opérateur capture, avec son équipement portable 4, un identifiant QR₁ sur le module communicant 2 à installer. En variante, l'identifiant 24 est saisi manuellement par l'opérateur dans un champ de l'application logicielle 34.

Sensiblement en parallèle ou successivement, une information de géolocalisation de l'équipement portable 4, appelée également information de géolocalisation d'installation et notée POS₁, est obtenue automatiquement ou manuellement à l'étape 52 par l'équipement portable 4.

L'application logicielle 34 associe l'information d'identification de l'opérateur d'installation, ID_{OP}, ainsi que l'identifiant QR₁ et l'information de géolocalisation POS₁ lors de l'étape 54.

De plus, lors de cette étape 54, l'adresse réseau physique MAC₁ du module communication est extraite de l'identifiant QR₁.

Ensuite, lors d'une étape de communication 56, l'application logicielle 34 établit une communication avec le serveur 40 via le deuxième mode de communication.

Lors de cette étape de communication, les informations recueillies, comprenant l'information d'identification d'opérateur d'installation ID_{OP}, l'adresse réseau physique MAC₁ du module communicant, et l'information de géolocalisation POS₁ sont envoyées au serveur.

En variante, l'identifiant QR₁ est envoyé au serveur, mémorisé dans la base de données 44 et l'adresse réseau physique MAC₁ est obtenue par l'application logicielle 46 mise en œuvre par le serveur 40.

Dans un mode de réalisation, l'étape de communication 56 comprend une première étape de connexion dans laquelle sont communiquées des informations d'identification de l'opérateur d'installation et une deuxième étape d'envoi de messages contenant les autres informations.

Le serveur 40 met en œuvre, par l'application logicielle 46, une étape 58 de vérification de la présence dans la base de données 44, préalablement mémorisée, de l'adresse réseau physique MAC₁.

En cas de vérification négative à l'étape 58, il en est déduit qu'il s'agit bien d'une première installation du module communicant 2. Par hypothèse, il en est déduit qu'il n'y a pas de risque de sécurité, l'utilisation du matériel est considérée licite.

Dans ce cas, l'étape 58 est suivie d'une étape 60 d'enregistrement des informations MAC₁ , ID_{OP} et POS₁ dans la base de données 44, et toutes les opérations à suivre pour la configuration du système de modules de surveillance et/ou de contrôle sont autorisées.

Par exemple, un indicateur d'autorisation de configuration/utilisation est mémorisé sur le serveur.

Les opérations de configuration comprennent l'enregistrement par le serveur 40 de paramètres de configuration locale du système de modules 8.

Par exemple, il s'agit des paramètres de configuration locale comme l'adresse d'appairage émetteur / récepteur radio, ainsi que la description des modules du système de modules 8 et de leurs caractéristiques principales.

Dans un exemple pratique, pour association avec un compteur d'eau, le poids d'impulsion en Litres/impulsion, ou le type de chaque entrée / sortie du système sont configurés.

Ces paramètres seront téléchargés par le système de modules 8, via le module communicant 2, lors de sa première connexion auprès du serveur 40, si le module communicant 2 n'a pas été mis sous tension lors de l'installation.

Le processus de configuration s'achève donc par une sauvegarde de tous les paramètres de configuration du système de modules 8 sur le serveur 40, déclarant que la configuration est terminée, en vue d'une réutilisation ultérieure, lorsque le module communicant 2 est mis sous tension et sa connexion au réseau est activée.

En variante, lorsque l'identifiant 24 comporte des informations relatives aux modules du système de modules 8, en plus de l'adresse réseau physique, une partie des opérations du processus de configuration est effectuée entre l'équipement portable 4 et le serveur 40.

En cas de vérification positive à l'étape 58, donc si l'adresse réseau physique MAC₁, qui est un identifiant unique du module communicant 2, est déjà présente dans la mémoire 42 du serveur, en association avec une information d'identification d'opérateur ID_{OP-init} et une position de géolocalisation POSᵢₙᵢₜ, il en est déduit qu'il y a un éventuel risque d'utilisation illicite. Le matériel peut avoir été déplacé, et éventuellement volé pour une utilisation illicite.

Dans ce cas, l'étape 58 est suivie d'une étape 62 de blocage de la configuration et de refus d'enregistrement.

Par exemple, en pratique, le serveur 40 identifie cette adresse comme interdite d'accès et interrompt le processus de configuration de l'application 34, et refuse tout accès aux données mémorisées dans la mémoire 42 du serveur, ainsi que l'enregistrement de tout utilisateur final du système de modules 8, rendant ce système inutilisable à distance.

Par exemple, un indicateur d'interdiction de configuration/utilisation est mémorisé sur le serveur.

De même le transfert de paramètres de configuration de la base de données 44 vers le module communicant 2 du système de modules 8 est bloqué, ce qui rend le système de modules 8 inexploitable.

Ainsi, ce blocage a pour objet de bloquer toute utilisation et toute configuration d'un module communicant volé dans un premier temps.

Ensuite, lors d'une étape 64, l'information d'identification d'opérateur ID_{OP-init} mémorisée dans la base de données 44 en association avec l'adresse réseau physique MAC₁ est récupérée, ainsi que la position POSᵢₙᵢₜ (première position enregistrée dans la base de données 44) et une notification est envoyée à l'opérateur d'installation initial pour autoriser une nouvelle géolocalisation du module communicant 2.

L'opérateur d'installation initial reçoit cette notification et accepte ou non le déblocage de la configuration du module communicant via l'application logicielle 46, en fonction des positions POS₁ et POSᵢₙᵢₜ.

Le procédé permet ainsi la validation d'un éventuel changement de localisation volontaire du module communicant 2 et du système de modules associé 8 par l'opérateur d'installation initial.

En effet, dans certains scénarios d'application, l'opérateur d'installation initial a pu déplacer lui-même un module communicant, ou l'installation et la configuration peuvent être effectuées, de manière prévue, à un moment ultérieur au moment d'enregistrement initial et par un autre opérateur d'installation. Dans ce cas, il est prévu d'accepter le déblocage.

Il est ainsi vérifié, par le serveur 40, lors d'une étape de vérification 66, si l'opérateur d'installation initial accepte le déblocage ou non.

En cas d'acceptation, l'étape 66 est suivie de l'étape 60 précédemment décrite.

En cas de refus, l'étape 66 est suivie d'une étape 68 dans laquelle un rapport d'utilisation illicite est émis avec les informations de géolocalisation POS₁ et POS₋ᵢₙᵢₜ reçues. Ce type de rapport peut par exemple être utilisé pour retrouver du matériel volé. Le serveur 40 mémorise l'information d'utilisation illicite et interdit toute configuration ou utilisation ultérieure du système de modules 8.

En variante, dès que les positions POSᵢₙᵢₜ et POS₁ sont différentes à un niveau de tolérance donné près, le blocage est imposé.

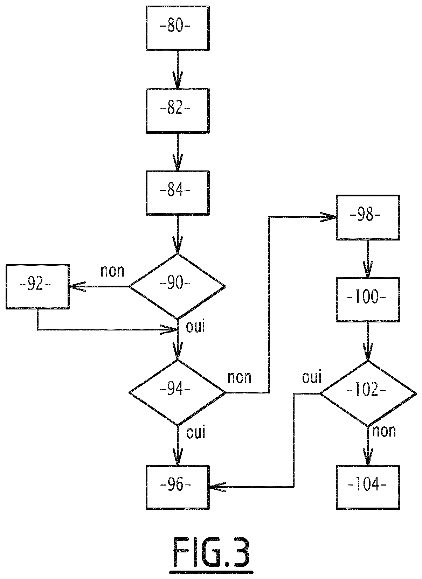

La figure 3 est un synoptique des principales étapes d'un procédé d'utilisation d'un module communicant selon un mode de réalisation de l'invention.

Il s'agit de l'utilisation par un utilisateur final, après l'installation et la configuration du module communicant 2.

Les étapes de ce procédé sont mises en œuvre respectivement par les applications logicielles 20, 35 et 46, comme expliqué plus en détail ci-après.

Lors d'une première étape 80, l'utilisateur final renseigne l'adresse réseau unique du système communicant qu'il souhaite mettre en fonction pour une utilisation nominale, soit par la capture, avec son équipement portable 4, d'un identifiant QR₂ sur le module communicant 2, soit par saisie manuelle.

Sensiblement en parallèle ou successivement, une information de géolocalisation de l'équipement portable 4, notée POS₂ et appelée information de géolocalisation d'utilisation, est obtenue à l'étape 82 par l'équipement portable 4. En variante, l'information de géolocalisation est obtenue par 3G ou par localisation via l'adresse IP de l'équipement portable.

De préférence, pour améliorer la sécurité, la saisie manuelle d'une information de géolocalisation POS₂ par l'utilisateur final n'est pas autorisée.

L'étape 82 est suivie d'une étape 84 comprenant l'extraction de l'adresse réseau physique MAC₂ du module communication de l'identifiant QR₂, et l'envoi au serveur 40 de l'information de géolocalisation d'utilisation POS₂ et de l'adresse MAC₂.

Une étape 90 de vérification de l'état de configuration est mise en œuvre.

Lors de cette étape 90 il est vérifié si le serveur dispose, dans une unité mémoire 42, de l'ensemble de paramètres de configuration utiles pour la configuration des modules 2, 10, 12 du système de modules 8. L'ensemble des paramètres de configuration pourra être téléchargé par la suite.

En cas de vérification négative, l'étape 90 est suivie d'une étape 92 indiquant à l'utilisateur final de s'adresser à un opérateur d'installation, typiquement un électricien, pour la configuration du module communicant.

En cas de vérification positive, l'étape 90 est suivie d'une étape 94 de vérification des informations de géolocalisation, mise en œuvre par le serveur 40.

Lors de cette étape, le serveur extrait de la base de données 44 mémorisée l'information de géolocalisation initiale POS₂₋ᵢₙᵢₜ, mémorisée en association avec l'adresse MAC₂, qui est comparée à l'information de géolocalisation d'utilisation POS₂.

Si ces informations de géolocalisation sont identiques ou sensiblement identiques à un niveau de tolérance prédéterminé près, l'étape 94 est suivie d'une étape 96 dans laquelle le module communicant 2 est mis en service, l'adresse MAC₂ étant utilisée pour les communications réseau au niveau de la couche physique. L'application logicielle 20 permet de télécharger des informations de contrôle relatives aux modules du système de modules communicants, notamment les paramètres de configuration, et de transmettre au serveur des informations de surveillance.

En cas de vérification négative à l'étape 94, cette étape est suivie d'une étape 98 de blocage de l'utilisation du module communicant 2, et par conséquent du système de modules 8.

Il est à noter qu'un blocage de l'utilisation de ce module communicant 2 est également prévu si, à tout moment, l'opérateur d'installation identifié notifie l'absence du module communicant 2 sur le site d'installation, car cela implique une suspicion de vol de matériel.

L'étape 98 est suivie d'une étape 100 dans laquelle l'information d'identification de l'opérateur d'installation initial ID_{OP-init} mémorisée en association avec l'adresse réseau physique MAC₂ est récupérée, et une notification est envoyée à l'opérateur d'installation initial.

Cette notification comprend l'adresse réseau physique MAC₂ et l'information de géolocalisation d'utilisation POS₂, ainsi que la position POS₂₋ᵢₙᵢₜ (première position enregistrée dans la base de données 44 en relation avec l'adresse réseau physique MAC₂).

L'opérateur d'installation initial reçoit cette notification et accepte ou non le déblocage pour utilisation du module communicant en fonction des positions POS₂ et POSᵢₙᵢₜ.

Il est ainsi vérifié, par le serveur 40, lors d'une étape de vérification 102, si l'opérateur d'installation initial accepte le déblocage ou non.

En cas d'acceptation, l'étape 102 est suivie de l'étape 96 précédemment décrite.

En cas de refus, l'étape 102 est suivie d'une étape 104 dans laquelle un rapport d'utilisation illicite est émis avec l'information de géolocalisation POS₂ reçue. Ce type de rapport peut par exemple être utilisé pour retrouver du matériel volé.

Le blocage d'utilisation du module communicant est maintenu.

L'invention a été décrite dans des modes de réalisation.

Ainsi, avantageusement, l'invention permet de bloquer la configuration et/ou l'utilisation d'un système de modules de contrôle et/ou de surveillance comportant un module communicant grâce à la mise en œuvre d'un identifiant du module communicant, en association avec des informations de géolocalisation et avec des informations d'identification d'opérateur d'installation. Grâce à l'invention, le matériel volé ne peut pas être remis en service.

## Revendications

1. Procédé de configuration et d'utilisation sécurisées d'un système (8) de modules de surveillance et/ou de contrôle d'équipements domestiques, industriels ou tertiaires, le système comprenant un module communicant (2), apte à recevoir des informations de surveillance et de contrôle des autres modules du système et à communiquer les informations reçues à un serveur centralisé (40) via un premier mode de communication, comportant des étapes de :
- obtention (51) par un équipement portable (4) associé à un opérateur d'installation d'un identifiant (24) apte à encoder des informations contenant une adresse réseau physique du module communicant,
- transmission (56) d'une information contenant ladite adresse réseau physique audit serveur centralisé (40) par ledit équipement portable (4) via un deuxième mode de communication ;
le procédé comportant en outre des étapes de :
- obtention (52) par l'équipement portable (4) d'une information de géolocalisation d'installation,-transmission (56) par ledit équipement portable au serveur centralisé (40), via le deuxième mode de communication, de l'information de géolocalisation d'installation,
- vérification (58) par le serveur centralisé (40) d'une mémorisation préalable de ladite adresse réseau physique,
- en cas de vérification négative, autorisation de configuration dudit système de modules (8) et enregistrement (60), dans une mémoire (42) du serveur centralisé (40), de ladite adresse réseau physique en association avec une information d'identification de l'opérateur d'installation et avec ladite information de géolocalisation d'installation reçue ;
en cas de vérification positive, extraction d'une information de géolocalisation initiale enregistrée dans ladite mémoire (42) du serveur centralisé (40) en association avec ladite adresse réseau physique, et blocage de la configuration du système de modules (8) lorsque ladite information de géolocalisation initiale diffère sensiblement de l'information de géolocalisation d'installation reçue, à un niveau de tolérance prédéterminé près.

2. Procédé selon la revendication 1, **caractérisé en ce qu'**il comprend, préalablement à l'étape d'obtention (51) d'un identifiant, une étape d'obtention (50) d'une information d'identification de l'opérateur d'installation, comprenant au moins une adresse courriel de l'opérateur d'installation.

3. Procédé selon la revendication 2, **caractérisé en ce que**, en cas de vérification positive, le procédé comporte un envoi (64) d'une notification contenant ladite information de géolocalisation d'installation reçue à l'opérateur d'installation identifié par l'information d'identification d'opérateur d'installation mémorisée en association avec ladite adresse réseau physique.

4. Procédé selon la revendication 3, **caractérisé en ce qu'**il comporte en outre l'envoi (64) de l'information de géolocalisation initiale à opérateur d'installation identifié.

5. Procédé selon la revendication 3 ou la revendication 4, **caractérisé en ce qu'**il comporte une étape de réception (66) d'une autorisation ou d'un refus de déblocage envoyée par ledit opérateur d'installation.

6. Procédé selon l'une quelconque des revendications 1 à 5, **caractérisé en ce que** ledit identifiant (24) encode des informations binaires, et **en ce que** le procédé comporte une étape de lecture de l'identifiant et d'extraction (54) d'une adresse réseau physique à partir des informations binaires encodées.

7. Procédé selon la revendication 6, **caractérisé en ce que** l'identifiant (24) comporte en outre des informations relatives aux modules du système de modules (8).

8. Procédé selon l'une quelconque des revendications 1 à 7,
**caractérisé en ce qu'**il comprend en outre, pour une mise en utilisation du système de modules, des étapes de :
- obtention (80), par un équipement portable associé à un utilisateur final, de l'adresse réseau physique du module communicant (2) et transmission de ladite adresse réseau physique audit serveur centralisé (40) ;
- obtention (82) d'une information de géolocalisation d'utilisation du module communicant (2) et transmission au serveur centralisé (40), par ledit équipement portable associé à l'utilisateur final, de l'information de géolocalisation d'utilisation ;
- vérification (90) par le serveur centralisé d'une mémorisation préalable de ladite adresse réseau physique,
- et en cas de présence de l'adresse réseau physique, extraction (94) d'une information de géolocalisation initiale enregistrée dans ladite mémoire du serveur centralisé en association avec ladite adresse réseau physique et vérification (94) de concordance entre l'information de géolocalisation initiale enregistrée et l'information de géolocalisation d'utilisation reçue, et autorisation ou interdiction d'utilisation du système de modules (8) en fonction de la vérification de concordance et d'un état de configuration associé à ladite adresse réseau physique.

9. Procédé selon la revendication 8, **caractérisé en ce qu'**en l'absence de concordance, il comporte une étape de blocage (98) de l'utilisation du système de modules (8).

10. Procédé selon la revendication 9, **caractérisé en ce qu'**en l'absence de concordance, il comporte des étapes de :
- envoi (100) d'une notification contenant ladite information de géolocalisation d'utilisation reçue et l'information de géolocalisation initiale enregistrée à l'opérateur d'installation identifié par une information d'identification d'opérateur d'installation mémorisée en association avec ladite adresse réseau physique,
- réception (102) d'une autorisation ou d'une interdiction de déblocage de l'utilisation du système de modules (8) envoyée par ledit opérateur d'installation.

11. Système de configuration et d'utilisation sécurisées d'un système (8) de modules de surveillance et/ou de contrôle d'équipements domestiques, industriels ou tertiaires,
comprenant ledit système (8) de modules et un serveur centralisé (40),
ledit système (8) de modules comprenant un module communicant (2), apte à recevoir des informations de surveillance et de contrôle des autres modules du système (8) de modules et à communiquer les informations reçues au serveur centralisé (40) via un premier mode de communication, et comportant :
- un équipement portable (4) associé à un opérateur d'installation adapté à :
- obtenir un identifiant (24) apte à encoder des informations contenant une adresse réseau physique du module communicant (2),
- obtenir une information de géolocalisation d'installation,
- transmettre, via un deuxième mode de communication, une information contenant ladite adresse réseau physique audit serveur centralisé (40);
- transmettre, via le deuxième mode de communication, au serveur centralisé (40), l'information de géolocalisation d'installation,
- le serveur centralisé (40) étant adapté à vérifier une mémorisation préalable de ladite adresse réseau physique, et,
en cas de vérification négative, à autoriser la configuration dudit système de modules et à enregistrer, dans une mémoire (42) du serveur centralisé (40), ladite adresse réseau physique en association avec une information d'identification de l'opérateur d'installation et avec ladite information de géolocalisation d'installation,
en cas de vérification positive, à extraire une information de géolocalisation initiale enregistrée dans ladite mémoire (42) du serveur centralisé (40) en association avec ladite adresse réseau physique, et à bloquer la configuration du système de modules (8) lorsque ladite information de géolocalisation initiale diffère sensiblement de l'information de géolocalisation d'installation reçue, à un niveau de tolérance prédéterminé près.

12. Système selon la revendication 11,
**caractérisé en ce qu'**il comprend, pour une mise en utilisation du système (8) de modules :
- un équipement portable associé à un utilisateur final adapté à obtenir l'adresse réseau physique du module communicant et à transmettre de ladite adresse réseau physique audit serveur centralisé (40), à obtenir une information de géolocalisation d'utilisation du module communicant (2) et à transmettre au serveur centralisé (40) l'information de géolocalisation d'utilisation ;
- le serveur centralisé étant adapté à vérifier une mémorisation préalable de ladite adresse réseau physique,
- et en cas de présence de l'adresse réseau physique, le serveur étant adapté à extraire une information de géolocalisation initiale enregistrée dans ladite mémoire du serveur centralisé en association avec ladite adresse réseau physique et à vérifier une concordance entre l'information de géolocalisation initiale enregistrée et l'information de géolocalisation d'utilisation reçue, et à
autoriser ou à interdire l'utilisation du système de modules en fonction de la vérification de la concordance et d'un état de configuration associé à ladite adresse réseau physique.

## Patentansprüche

1. Verfahren zur gesicherten Konfiguration und Verwendung eines Modulsystems (8) der Überwachung und/oder Steuerung von haustechnischen Ausrüstungen im industriellen oder Dienstleistungs-Sektor, wobei das System eine kommunizierendes Modul (2) umfasst, das geeignet ist, Überwachungs- und Steuerungsinformationen von den anderen Modulen des Systems zu erhalten und die empfangenen Informationen an einen zentralisierten Server (40) über eine erste Kommunikationsart zu kommunizieren, die Schritte aufweisend:
- Erhalten (51) einer Kennung (24) von einem einem Betreiber der Anlage zugeordneten tragbaren Gerät (4), die geeignet ist, Informationen zu kodieren, die eine physikalische Netzadresse des kommunizierenden Moduls enthalten,
- Senden (56) einer die physikalische Netzadresse enthaltenden Information von dem tragbaren Gerät (4) über eine zweite Kommunikationsart an den zentralisierten Server (40);
wobei das Verfahren außerdem die Schritte aufweist:
- Erhalten (52) einer Information der Ortsbestimmung der Anlage von dem tragbaren Gerät (4),
- Senden (56) der Information der Ortsbestimmung der Anlage über die zweite Kommunikationsart von dem tragbaren Gerät an den zentralisierten Server (40),
- Überprüfen (58) einer vorhergehenden Speicherung der physikalischen Netzadresse durch den zentralisierten Server (40),
- im Fall einer negativen Überprüfung Zulassen der Konfiguration des Modulsystems (8) und Registrieren (60) der physikalischen Netzadresse in Zuordnung mit einer Identifikationsinformation des Betreibers der Anlage und mit der empfangenen Information der Ortsbestimmung der Anlage in einem Speicher (42) des zentralisierten Servers;
- im Fall einer positiven Überprüfung Abrufen einer ursprünglichen Information der Ortsbestimmung, die in dem Speicher (42) des zentralisierten Servers (40) in Zuordnung mit der physikalischen Netzadresse registriert ist, und Sperren der Konfiguration des Modulsystems (8), wenn die ursprüngliche Information der Ortsbestimmung merkbar über einen vorbestimmten engen Toleranzbereich von der empfangenen Information der Ortsbestimmung der Anlage abweicht.

2. Verfahren nach Anspruch 1, **dadurch gekennzeichnet, dass** es vor dem Schritt des Erhaltens (51) einer Kennung einen Schritt des Erhaltens (50) eine Identifikationsinformation des Betreibers der Anlage umfasst, die mindestens eine E-Mail-Adresse des Betreibers der Anlage enthält.

3. Verfahren nach Anspruch 2, **dadurch gekennzeichnet, dass** im Fall der positiven Überprüfung das Verfahren ein Schicken (64) einer Meldung, die die empfangene Information der Ortsbestimmung der Anlage an den Betreiber der Anlage enthält, an den Betreiber der Anlage, der durch die in Zuordnung mit der physikalischen Netzadresse gespeicherten Identifikationsinformation des Betreibers der Anlage identifiziert ist, aufweist.

4. Verfahren nach Anspruch 3, **dadurch gekennzeichnet, dass** es außerdem das Schicken (64) der ursprünglichen Information der Ortsbestimmung an den identifizierten Betreiber der Anlage aufweist.

5. Verfahren nach Anspruch 3 oder Anspruch 4, **dadurch gekennzeichnet, dass** es einen Schritt des Empfangens (66) einer Zulassung oder einer Verweigerung des Entsperrens, die von dem Betreiber der Anlage geschickt wird, aufweist.

6. Verfahren nach einem beliebigen der Ansprüche 1 bis 5, **dadurch gekennzeichnet, dass** die Kennung (24) binäre Informationen codiert und dass das Verfahren einen Schritt des Lesens der Kennung und des Abrufens (54) einer physikalischen Netzadresse aus den kodierten binären Informationen aufweist.

7. Verfahren nach Anspruch 6, **dadurch gekennzeichnet, dass** die Kennung (24) außerdem Informationen hinsichtlich der Module des Modulsystems (8) aufweist.

8. Verfahren nach einem beliebigen der Ansprüche 1 bis 7, **dadurch gekennzeichnet, dass** es außerdem für die Durchführung einer Verwendung des Modulsystems die Schritte umfasst:
- Erhalten (80) der physikalischen Netzadresse des kommunizierenden Moduls (2) von einem einem Endbenutzer zugeordneten tragbaren Gerät und Senden der physikalischen Netzadresse an den zentralisierten Server (40);
- Erhalten (82) einer Information der Ortsbestimmung der Verwendung des kommunizierenden Moduls (2) und Senden der Information der Ortsbestimmung der Verwendung von dem dem Endbenutzer zugeordneten tragbaren Gerät an den zentralisierten Server (40);
- Überprüfen (90) einer vorherigen Speicherung der physikalischen Netzadresse durch den zentralisierten Server,
- und im Fall des Vorhandenseins der physikalischen Netzadresse Abrufen (94) einer ursprünglichen Information der Ortsbestimmung, die in dem Speicher des zentralisierten Server in Zuordnung mit der physikalischen Netzadresse registriert ist, und Überprüfen (94) der Übereinstimmung zwischen der ursprünglichen registrierten Information der Ortsbestimmung und der empfangenen Information der Ortsbestimmung der Verwendung und Zulassen oder Untersagen der Verwendung des Modulsystems (8) abhängig von der Überprüfung der Übereinstimmung und eines der physikalischen Netzadresse zugeordneten Konfigurationszustandes.

9. Verfahren nach Anspruch 8, **dadurch gekennzeichnet, dass** es bei nicht vorhandener Übereinstimmung einen Schritt des Sperrens (98) der Verwendung des Modulsystems (8) aufweist.

10. Verfahren nach Anspruch 9, **dadurch gekennzeichnet, dass** es bei nicht vorhandener Übereinstimmung die Schritte aufweist:
- Senden (100) einer Meldung, die die empfangene Information der Ortsbestimmung der Verwendung und die ursprüngliche registrierte Information der Ortsbestimmung enthält, an den durch eine in Zuordnung mit der physikalischen Netzadresse gespeicherten Identifikationsinformation des Betreibers der Anlage identifizierten Betreiber der Anlage,
- Empfangen (102) einer Zulassung oder Untersagung des Entsperrens der Verwendung des Modulsystems (8), die von dem Betreiber der Anlage geschickt wurde.

11. System zur gesicherten Konfiguration und Verwendung eines Modulsystems (8) der Überwachung und/oder Steuerung von haustechnischen Ausrüstungen im industriellen oder Dienstleistungs-Sektor,
das das Modulsystem (8) und einen zentralisierten Server (40) umfasst,
wobei das System ein kommunizierendes Modul (2) umfasst, das geeignet ist, Überwachungs- und Steuerungsinformationen von den anderen Modulen des Modulsystems (8) zu erhalten und die empfangenen Informationen an den zentralisierten Server (40) über eine erste Kommunikationsart zu kommunizieren, und aufweisend:
- ein tragbares Gerät (4), das einem Betreiber der Anlage zugeordnet ist und geeignet ist:
- eine Kennung (24) zu erhalten, die geeignet ist, Informationen zu kodieren, die eine physikalische Netzadresse des kommunizierenden Moduls enthalten,
- eine Information der Ortsbestimmung der Anlage zu erhalten,
- eine die physikalische Netzadresse enthaltenden Information über eine zweite Kommunikationsart an den zentralisierten Server (40) zu senden;
- die Information der Ortsbestimmung der Anlage über die zweite Kommunikationsart an den zentralisierten Server (40) zu senden,
- wobei der zentralisierte Server geeignet ist, eine vorhergehenden Speicherung der physikalischen Netzadresse zu überprüfen und,
im Fall einer negativen Überprüfung die Konfiguration des Modulsystems (8) zuzulassen und die physikalische Netzadresse in Zuordnung mit einer Identifikationsinformation des Betreibers der Anlage und mit der Information der Ortsbestimmung der Anlage in einem Speicher (42) des zentralisierten Servers zu registrieren,
im Fall einer positiven Überprüfung eine ursprüngliche Information der Ortsbestimmung, die in dem Speicher (42) des zentralisierten Servers (40) in Zuordnung mit der physikalischen Netzadresse registriert ist, abzurufen und die Konfiguration des Modulsystems (8) zu sperren, wenn die ursprüngliche Information der Ortsbestimmung merkbar über einen vorbestimmten engen Toleranzbereich von der empfangenen Information der Ortsbestimmung der Anlage abweicht.

12. System nach Anspruch 11, **dadurch gekennzeichnet, dass** es für die Durchführung der Verwendung des Modulsystems (8) umfasst:
- ein einem Endbenutzer zugeordnetes tragbares Gerät, das geeignet ist, die physikalische Netzadresse des kommunizierenden Moduls (2) zu erhalten und die physikalische Netzadresse an den zentralisierten Server (40) zu senden, eine Information der Ortsbestimmung der Verwendung des kommunizierenden Moduls (2) zu erhalten und die Information der Ortsbestimmung der Verwendung an den zentralisierten Server (40) zu senden;
- wobei der zentralisierte Server geeignet ist, eine vorhergehende Speicherung der physikalischen Netzadresse zu überprüfen,
- und im Fall des Vorhandenseins der physikalischen Netzadresse der Server geeignet ist, eine ursprüngliche Information der Ortsbestimmung, die in dem Speicher des zentralisierten Server in Zuordnung mit der physikalischen Netzadresse registriert ist, abzurufen und eine Übereinstimmung zwischen der ursprünglichen registrierten Information der Ortsbestimmung und der empfangenen Information der Ortsbestimmung der Verwendung abzurufen und
die Verwendung des Modulsystems abhängig von der Überprüfung der Übereinstimmung und eines der physikalischen Netzadresse zugeordneten Konfigurationszustandes zuzulassen oder zu untersagen.

## Claims

1. Method for the secure configuration and use of a system (8) of modules for monitoring and/or controlling domestic, industrial or tertiary equipment, the system comprising a communicating module (2) capable of receiving monitoring and control information from the other modules of the system and of communicating the received information to a centralised server (40) *via* a first mode of communication, comprising steps of:
- obtaining (51), by portable equipment (4) associated with an installation operator, an identifier (24) capable of encoding information containing a physical network address of the communicating module,
- transmitting (56) information containing said physical network address to said centralised server (40) by said portable equipment (4) *via* a second mode of communication;
the method further comprising steps of:
- obtaining (52) installation geolocation information by the portable equipment (4),
- transmitting (56) the installation geolocation information by said portable equipment to the centralised server (40), *via* the second mode of communication,
- verifying (58), by the centralised server (40), prior storage of said physical network address,
- in the case of negative verification, authorising the configuration of said system of modules (8) and recording (60) said physical network address in a memory (42) of the centralised server (40) in association with installation operator identification information and with said received installation geolocation information;
in the case of positive verification, extracting initial geolocation information recorded in said memory (42) of the centralised server (40) in association with said physical network address, and blocking the configuration of the system of modules (8) when said initial geolocation information differs substantially from the received installation geolocation information, to within a predetermined tolerance level.

2. Method according to claim 1, **characterised in that** it comprises, prior to the step of obtaining (51) an identifier, a step of obtaining (50) installation operator identification information comprising at least one e-mail address of the installation operator.

3. Method according to claim 2, **characterised in that**, in the case of positive verification, the method comprises sending (64) a notification containing said received installation geolocation information to the installation operator identified by the installation operator identification information stored in association with said physical network address.

4. Method according to claim 3, **characterised in that** it further comprises sending (64) the initial geolocation information to the identified installation operator.

5. Method according to claim 3 or claim 4, **characterised in that** it comprises a step of receiving (66) an unblocking authorisation or refusal sent by said installation operator.

6. Method according to any one of claims 1 to 5, **characterised in that** said identifier (24) encodes binary information, and **in that** the method comprises a step of reading the identifier and extracting (54) a physical network address from the encoded binary information.

7. Method according to claim 6, **characterised in that** the identifier (24) further comprises information relating to the modules of the system of modules (8).

8. Method according to any one of claims 1 to 7,
**characterised in that** it further comprises, for bringing the system of modules into use, steps of:
- obtaining (80), by portable equipment associated with a final user, the physical network address of the communicating module (2) and transmitting said physical network address to said centralised server (40);
- obtaining (82) use geolocation information of the communicating module (2) and transmitting the use geolocation information to the centralised server (40) by said portable equipment associated with the final user;
- verifying (90), by the centralised server, prior storage of said physical network address,
- and, in the case where the physical network address is present, extracting (94) initial geolocation information recorded in said memory of the centralised server in association with said physical network address, and verifying (94) agreement between the recorded initial geolocation information and the received use geolocation information, and authorising or prohibiting use of the system of modules (8) as a function of the verification of agreement and of a configuration state associated with said physical network address.

9. Method according to claim 8, **characterised in that**, in the absence of agreement, it comprises a step of blocking (98) use of the system of modules (8).

10. Method according to claim 9, **characterised in that**, in the absence of agreement, it comprises steps of:
- sending (100) a notification containing said received use geolocation information and the recorded initial geolocation information to the installation operator identified by installation operator identification information stored in association with said physical network address,
- receiving (102) an authorisation or prohibition of unblocking of use of the system of modules (8) sent by said installation operator.

11. System for the secure configuration and use of a system (8) of modules for monitoring and/or controlling domestic, industrial or tertiary equipment,
comprising said system (8) of modules and a centralised server (40),
said system (8) of modules comprising a communicating module (2) capable of receiving monitoring and control information from the other modules of the system (8) of modules and of communicating the received information to the centralised server (40) *via* a first mode of communication, and comprising:
- portable equipment (4) associated with an installation operator, adapted to:
- obtain an identifier (24) capable of encoding information containing a physical network address of the communicating module (2),
- obtaining installation geolocation information,
- transmitting information containing said physical network address to said centralised server (40) *via* a second mode of communication,
- transmitting installation geolocation information to the centralised server (40) *via* the second mode of communication,
- the centralised server (40) being adapted to verify prior storage of said physical network address, and
in the case of negative verification, to authorise the configuration of said system of modules and to record, in a memory (42) of the centralised server (40), said physical network address in association with installation operator identification information and with said installation geolocation information,
in the case of positive verification, to extract initial geolocation information recorded in said memory (42) of the centralised server (40) in association with said physical network address, and to block the configuration of the system of modules (8) when said initial geolocation information differs substantially from the received installation geolocation information, to within a predetermined tolerance level.

12. System according to claim 11,
**characterised in that** it comprises, for bringing the system (8) of modules into use:
- portable equipment associated with a final user, adapted to obtain the physical network address of the communicating module and to transmit said physical network address to said centralised server (40), to obtain use geolocation information of the communicating module (2) and to transmit the use geolocation information to the centralised server (40);
- the centralised server being adapted to verify prior storage of said physical network address,
- and, in the case where the physical network address is present, the server being adapted to extract initial geolocation information recorded in said memory of the centralised server in association with said physical network address, and to verify agreement between the recorded initial geolocation information and the received use geolocation information, and to
authorise or prohibit the use of the system of modules as a function of the verification of agreement and of a configuration state associated with said physical network address.
